# FASCICULE DE BREVET EUROPEEN

(11) **EP 2 416 972 B1**
(45) Date de publication et mention de la délivrance du brevet: **02.10.2013**
(21) Numéro de dépôt: 10715171.4
(22) Date de dépôt: 06.04.2010
(51) Int. Cl.: B60C 3/04, B60C 9/20, B60C 9/22

(54) **PNEUMATIQUE POUR VEHICULES LOURDS COMPORTANT UNE COUCHE D'ELEMENTS DE RENFORCEMENT CIRCONFERENTIELS**
REIFEN FÜR SCHWERFAHRZEUGE MIT EINER LAGE AUS UMFANGSVERSTÄRKUNGSELEMENTEN
TYRE FOR HEAVY VEHICLES COMPRISING A LAYER OF PERIPHERAL REINFORCEMENT ELEMENTS

(30) Priorité: 07.04.2009 FR 0952260
(43) Date de publication de la demande: 15.02.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DELEBECQ, Joël, 63670 La Roche Blanche (FR); GODEAU, Gilles, 63000 Clermont-Ferrand (FR)
(74) Mandataire: Le Cam, Stéphane Georges Elie
(86) Numéro de dépôt international: PCT/EP2010/054532
(87) Numéro de publication internationale: WO 2010/115891

(56) Documents cités:
- EP-A- 0 318 128
- EP-A- 1 486 355
- WO-A-2005/016668
- FR-A1- 2 759 945
- JP-A- 53 136 203
- US-A1- 2004 069 392

## Description

La présente invention concerne un pneumatique à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-fmis pour réaliser certains aspects architecturaux (tels que des nappes, tringles, etc.), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont Avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieure à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers" sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier et en particulier de l'armature de sommet est pénalisée.

Il existe en effet des contraintes au niveau de l'armature de sommet et plus particulièrement des contraintes de cisaillement entre les couches de sommet, alliées à une élévation non négligeable de la température de fonctionnement au niveau des extrémités de la couche de sommet axialement la plus courte, qui ont pour conséquence l'apparition et la propagation de fissures de la gomme au niveau desdites extrémités. Le même problème existe dans le cas de bords de deux couches d'éléments de renforcement, ladite autre couche n'étant pas obligatoirement radialement adjacente à la première.

Afin d'améliorer l'endurance de l'armature de sommet du type de pneumatique étudié, des solutions relatives à la structure et qualité des couches et/ou profilés de mélanges caoutchouteux qui sont disposés entre et/ou autour des extrémités de nappes et plus particulièrement des extrémités de la nappe axialement la plus courte ont déjà été apportées.

Le brevet FR 1 389 428, pour améliorer la résistance à la dégradation des mélanges de caoutchouc situés au voisinage des bords d'armature de sommet, préconise l'utilisation, en combinaison avec une bande de roulement de faible hystérésis, d'un profilé de caoutchouc couvrant au moins les côtés et les bords marginaux de l'armature de sommet et constitué d'un mélange caoutchouteux à faible hystérésis.

Le brevet FR 2 222 232, pour éviter les séparations entre nappes d'armature de sommet, enseigne d'enrober les extrémités de l'armature dans un matelas de caoutchouc, dont la dureté Shore A est différente de celle de la bande de roulement surmontant ladite armature, et plus grande que la dureté Shore A du profilé de mélange caoutchouteux disposé entre les bords de nappes d'armature de sommet et armature de carcasse.

La demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Les roulages prolongés dans des conditions particulièrement sévères des pneumatiques ainsi construits ont fait apparaître des limites en termes d'endurance de ces pneumatiques.

Pour remédier à de tels inconvénients et améliorer l'endurance de l'armature de sommet de ces pneumatiques, il a été proposé d'associer aux couches de sommet de travail à angle au moins une couche additionnelle d'éléments de renforcement sensiblement parallèles à la direction circonférentielle. La demande de brevet WO 99/24269 propose notamment, de part et d'autre du plan équatorial et dans le prolongement axial immédiat de la nappe additionnelle d'éléments de renforcement sensiblement parallèles à la direction circonférentielle, de coupler, sur une certaine distance axiale, les deux nappes de sommet de travail formées d'éléments de renforcement croisés d'une nappe à la suivante pour ensuite les découpler par des profilés de mélange de caoutchouc au moins sur le restant de la largeur commune aux dites deux nappes de travail.

Le document EP-A-1486355 divulgue un pneumatique ayant les caractéristiques techniques du préambule de la revendication 1.

Un but de l'invention est de fournir des pneumatiques pour véhicules « Poids-Lourds » dont les performances d'endurance sont conservées pour des usages routiers et dont le poids est réduit par rapport aux pneumatiques usuels.

Ce but est atteint selon l'invention par un pneumatique à armature de carcasse radiale comprenant une armature de sommet formée d'au moins deux couches de sommet de travail d'éléments de renforcement inextensibles, croisés d'une nappe à l'autre en faisant avec la direction circonférentielle des angles compris entre 10° et 45°, elle-même coiffée radialement d'une bande de roulement, ladite bande de roulement étant réunie à deux bourrelets par l'intermédiaire de deux flancs, l'armature de sommet comportant au moins une couche d'éléments de renforcement circonférentiels, le rapport de l'épaisseur du bloc sommet à une extrémité d'épaulement sur l'épaisseur du bloc sommet dans le plan médian circonférentiel étant supérieur à 1,20 et le rapport de la distance entre la surface d'usure limite et les éléments de renforcement de la couche d'éléments de renforcement circonférentiels dans le plan médian circonférentiel sur la distance entre la surface d'usure limite et les éléments de renforcement de la couche d'éléments de renforcement circonférentiels aux extrémités de ladite couche d'éléments de renforcement circonférentiels est compris entre 0.95 et 1.05.

Une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

L'épaisseur du bloc sommet dans le plan médian circonférentiel est définie comme étant la distance selon la direction radiale entre la tangente au sommet de la bande de roulement dans le plan médian circonférentiel et la tangente au mélange caoutchouteux radialement le plus à l'intérieur du pneumatique, dans le plan médian circonférentiel.

L'épaisseur du bloc sommet à une extrémité d'épaulement est définie par la longueur de la projection orthogonale de l'extrémité d'épaulement sur la couche de mélange caoutchouteux radialement la plus à l'intérieur du pneumatique.

La surface d'usure limite d'un pneumatique est définie au sens de l'invention comme étant la surface extrapolée à partir des indicateurs d'usure présents sur le pneumatique.

Les distances entre la surface d'usure limite et les éléments de renforcement de la couche d'éléments de renforcement circonférentiels sont mesurées selon la normale à la surface extérieure de la bande de roulement passant par le point de mesure considéré de la couche d'éléments de renforcement circonférentiels.

Les différentes mesures sont effectuées sur une coupe transversale d'un pneumatique, le pneumatique étant donc dans un état non gonflé.

Le pneumatique ainsi défini selon l'invention permet, pour une dimension donnée, de conserver des performances en termes d'endurance et d'usure du pneumatique satisfaisantes lors d'utilisation routière, le pneumatique étant sensiblement allégé.

Comparé à un pneumatique usuel de même dimension, le pneumatique selon l'invention présente des épaisseurs du bloc sommet sensiblement inférieures dans la zone centrée sur le plan médian circonférentiel.

En termes d'architecture de l'armature de renforcement au niveau du bloc sommet, c'est-à-dire sous la bande de roulement, cela se traduit par des couches de renforcement de l'armature de carcasse et des couches de renforcement de l'armature de sommet dont les courbures axiales (ou méridiennes) sont quasiment concentriques en tous points au profil de la surface d'usure et donc à celui de la bande de roulement.

Les pneumatiques usuels prévoient habituellement une couche de mélange caoutchouteux complémentaire mise en place sous la bande de roulement de manière à être centrée sur le plan médian circonférentiel. La présence d'une telle couche permet d'obtenir un rayon de la courbure axiale de la bande de roulement inférieur à celui de la courbure axiale des couches de renforcement de l'armature de sommet. Les pneumatiques selon l'invention ne comportent pas une telle couche, ce qui permet notamment d'alléger le pneumatique. L'absence d'une telle couche peut également contribuer à limiter l'échauffement du pneumatique lors de son utilisation et donc contribuer à ses performances en termes d'endurance.

Selon un mode de réalisation préféré de l'invention, les éléments de renforcement de la couche d'éléments de renforcement circonférentiels sont des câbles à torons présentant une réduction du module tangent maximum entre leur état initial et extraits du pneumatique supérieure à 15 GPa et de préférence supérieure à 20 GPa.

Les modules exprimés ci-dessus sont mesurés sur une courbe contrainte de traction en fonction de l'allongement déterminée avec une précontrainte de 5 N, la contrainte de traction correspondant à une tension mesurée ramenée à la section de métal de l'élément de renforcement. Ces mesures sont effectuées en traction selon la norme ISO 6892 de 1984.

Les câbles extraits de pneumatiques sur lesquelles les mesures sont effectuées sont prélevés sur des pneumatiques dont les constituants, autres que les câbles en question, et notamment les mélanges susceptibles de pénétrer lesdits câbles sont des constituants usuels pour les applications de type pneumatiques pour poids-lourds.

Avantageusement selon ce mode de réalisation de l'invention, les éléments de renforcement de la couche d'éléments de renforcement circonférentiels sont des câbles à torons qui sont assemblés par un procédé de retordage qui permet de conférer une aération au câble.

Un tel procédé de retordage peut notamment concerner le retordage lors de la fabrication des torons. Le procédé de retordage consiste alors essentiellement:
- à enrouler en hélice sur une couche interne les fils de la couche externe selon un pas transitoire de retordage donné,
- à réaliser un surtordage destiné à réduire ce pas transitoire, i.e. destiné à augmenter l'angle d'hélice de ladite couche externe et, par conséquent, la courbure d'hélice de cette dernière, et
- à stabiliser par détorsion le toron obtenu pour l'obtention d'un couple résiduel nul.

Le procédé de retordage peut encore concerner l'assemblage des torons. Le procédé de retordage consiste alors essentiellement:
- à enrouler les torons selon un pas transitoire de retordage donné,
- à réaliser un surtordage destiné à réduire ce pas transitoire (i.e. destiné à augmenter l'angle d'hélice de l'assemblage des torons, par conséquent, la courbure d'hélice), et
- à stabiliser par détorsion le câble obtenu pour l'obtention d'un couple résiduel nul.

Le procédé de retordage peut enfin être une combinaison d'un retordage lors de la réalisation de chacun des torons et d'un retordage lors de l'assemblage des torons pour obtenir le câble.

Le procédé de retordage ainsi décrit qui est mis en oeuvre pour l'obtention d'un câble selon l'invention confère aux fils constituants la couche externe d'un toron et/ou aux torons constituants le câble une courbure importante qui les écarte axialement (la direction axiale est alors une direction perpendiculaire soit à la direction de l'axe d'un toron dans le cas des fils soit perpendiculaire à la direction de l'axe du câble dans le cas des torons). Cette courbure est définie, d'une part, par le diamètre d'hélice de cette couche externe et, d'autre part, par le pas d'hélice ou bien par l'angle d'hélice de ladite couche externe (angle mesuré à partir de l'axe du câble).

Il faut noter que le procédé de retordage ainsi décrit permet d'augmenter à la fois le diamètre d'hélice et l'angle d'hélice.

Selon l'invention, cet angle d'hélice est avantageusement compris entre 25° et 45°.

Le procédé de retordage ainsi décrit appliqué aux fils constituant les torons et/ou aux torons contribue à élever d'une manière significative l'allongement structural du câble, lequel est proportionnel à tg² (angle d'hélice).

Les inventeurs ont su mettre en évidence que des câbles ainsi réalisés qui présentent une réduction du module tangent maximum entre leur état initial et extraits du pneumatique supérieure à 15 GPa, comparés à des câbles de même formule mais réalisés sans étape de retordage et avec des pas d'hélices inférieurs, présentent des allongements structuraux à cru et extraits du pneumatique supérieurs. D'autre part, ces mêmes câbles selon l'invention, toujours comparés à des câbles de même formule mais réalisés sans étape de retordage et avec des pas d'hélices inférieurs, s'ils présentent dans leur état initial un module tangent maximum supérieur, présentent de manière tout à fait surprenante un modules tangent maximum inférieur lorsqu'ils sont extraits du pneumatique par rapport à celui des câbles de même formule mais réalisés sans étape de retordage et avec des pas d'hélices inférieurs.

Dans le cas des pneumatiques selon l'invention dont les couches de renforcement de l'armature de sommet présentent des courbures axiales quasiment concentriques en tous points au profil de la bande de roulement, l'utilisation de tels câbles va permettre d'améliorer encore l'endurance des pneumatiques. En effet, le module tangent maximum notamment plus faible pour les câbles extraits du pneumatique combiné à un allongement structural plus important, comparés à des câbles de même formule mais réalisés sans étape de retordage et avec des pas d'hélices inférieurs, va permettre de diminuer les tensions auxquelles sont soumis les éléments de renforcement de la couche d'éléments de renforcement circonférentiels notamment au niveau des extrémités de ladite couche lorsque celle-ci présente une forme galbée comme dans le cas de l'invention lors des passages dans l'aire de contact qui entraînent une déformation du pneumatique.

L'utilisation de tels éléments de renforcement dans au moins une couche d'éléments de renforcement circonférentiels permet par ailleurs de conserver des rigidités de la couche suffisante après les étapes de conformation et de cuisson dans des procédés de fabrication usuels.

Selon un mode de réalisation avantageux de l'invention, les éléments de renforcement d'au moins une couche d'éléments de renforcement circonférentiels sont des éléments de renforcement métalliques présentant un module sécant à 0,7 % d'allongement compris entre 10 et 120 GPa et un module tangent maximum inférieur à 150 GPa.

Selon une réalisation préférée, le module sécant des éléments de renforcement à 0,7 % d'allongement est inférieur à 100 Gpa et supérieur à 20 GPa, de préférence compris entre 30 et 90 GPa et de préférence encore inférieur à 80 GPa.

De préférence également, le module tangent maximum des éléments de renforcement est inférieur à 130 GPa et de préférence encore inférieur à 120 GPa.

Les modules exprimés ci-dessus sont mesurés sur une courbe contrainte de traction en fonction de l'allongement déterminée avec une précontrainte de 5 N, la contrainte de traction correspondant à une tension mesurée ramenée à la section de métal de l'élément de renforcement.

Selon un mode de réalisation préféré, les éléments de renforcements d'au moins une couche d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs. De tels éléments de renforcement de la nappe additionnelle sont habituellement dénommés éléments "bi-module".

Selon une réalisation préférée de l'invention, la pente sensiblement constante et forte apparaît à partir d'un allongement relatif compris entre 0,4% et 0,7%.

Les différentes caractéristiques des éléments de renforcement énoncées ci-dessus sont mesurées sur des éléments de renforcement prélevés sur des pneumatiques.

Des éléments de renforcement plus particulièrement adaptés à la réalisation d'au moins une couche d'éléments de renforcement circonférentiels selon l'invention sont par exemple des assemblages de formule 21.23, dont la construction est 3x(0.26+6x0.23) 5.0/7.5 SS ; ce câble à torons est constitué de 21 fils élémentaires de formule 3 x (1+6), avec 3 torons tordus ensembles avec un pas de 7.5 mm,chacun constitué de 7 fils, un fil formant une âme centrale de diamètre égal à 26/100 mm et 6 fils enroulés de diamètre égal à 23/100 mm avec un pas de 5 mm. Un tel câble présente un module sécant à à 0,7 % égal à 45 GPa et un module tangent maximum égal à 100 GPa, mesurés sur une courbe contrainte de traction en fonction de l'allongement déterminée avec une précontrainte de 5 N, la contrainte de traction correspondant à une tension mesurée ramenée à la section de métal de l'élément de renforcement.

L'invention prévoit avantageusement qu'au moins une couche constituant l'architecture sommet est présente radialement sous le « rib », ou sculpture d'orientation principale longitudinale, axialement le plus à l'extérieur. Cette réalisation permet de renforcer la rigidité de ladite sculpture.

Selon une réalisation préférée de l'invention, la différence entre la largeur axiale de la couche de sommet de travail axialement la plus large et la largeur axiale de la couche de sommet de travail axialement la moins large est comprise entre 10 et 30 mm.

De préférence encore, la couche de sommet de travail axialement la plus large est radialement à l'intérieur des autres couches de sommet de travail.

Un mode de réalisation avantageux de l'invention prévoit que la largeur axiale d'au moins une couche d'éléments de renforcement circonférentiels est inférieure à la largeur axiale de la couche de sommet de travail axialement la plus large.

Une telle largeur d'au moins une couche d'éléments de renforcement circonférentiels autorise notamment une diminution des contraintes de cisaillement entre les couches de travail et donc améliore encore de ce fait les performances d'endurance du pneumatique.

La couche d'éléments de renforcement circonférentiels selon l'invention est avantageusement une couche continue sur toute sa largeur axiale.

Selon une variante de réalisation de l'invention, au moins une couche d'éléments de renforcement circonférentiels est disposée radialement entre deux couches de sommet de travail.

Selon cette variante de réalisation, la couche d'éléments de renforcement circonférentiels permet de limiter de manière plus importante les mises en compression des éléments de renforcement de l'armature de carcasse qu'une couche semblable mise en place radialement à l'extérieur des couches de travail. Elle est préférablement radialement séparée de l'armature de carcasse par au moins une couche de travail de façon à limiter les sollicitations desdits éléments de renforcement et ne pas trop les fatiguer.

Avantageusement encore dans le cas d'une couche d'éléments de renforcement circonférentiels disposée radialement entre deux couches de sommet de travail, les largeurs axiales des couches de sommet de travail radialement adjacentes à la couche d'éléments de renforcement circonférentiels sont supérieures à la largeur axiale de ladite couche d'éléments de renforcement circonférentiels et de préférence, lesdites couches de sommet de travail adjacentes à la couche d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

La présence de tels couplages entre les couches de sommet de travail adjacentes à la couche d'éléments de renforcement circonférentiels permettent encore la diminution des contraintes de tension agissant sur les éléments circonférentiels axialement le plus à l'extérieur et situé le plus près du couplage.

L'épaisseur des profilés de découplage entre nappes de travail, mesurée au droit des extrémités de la nappe de travail la moins large, sera au moins égale à deux millimètres, et préférentiellement supérieure à 2,5 mm.

Il faut entendre par nappes couplées des nappes dont les éléments de renforcement respectifs sont séparés radialement d'au plus 1,5 mm, ladite épaisseur de caoutchouc étant mesurée radialement entre les génératrices respectivement supérieure et inférieure desdits éléments de renforcement.

L'invention prévoit encore avantageusement pour diminuer les contraintes de tension agissant sur les éléments circonférentiels axialement le plus à l'extérieur que l'angle formé avec la direction circonférentielle par les éléments de renforcement des couches de sommet de travail est inférieur à 30° et de préférence inférieur à 25°.

Selon une autre variante avantageuse de l'invention, les couches de sommet de travail comportent des éléments de renforcement, croisés d'une nappe à l'autre, faisant avec la direction circonférentielle des angles variables selon la direction axiale, lesdits angles étant supérieurs sur les bords axialement extérieurs des couches d'éléments de renforcement par rapport aux angles desdits éléments mesurés au niveau du plan médian circonférentiel. Une telle réalisation de l'invention permet d'augmenter la rigidité circonférentielle dans certaines zones et au contraire de la diminuer dans d'autres, notamment pour diminuer les mises en compression de l'armature de carcasse.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'un exemple de réalisation de l'invention en référence aux figures 1 à 3 qui représentent :
- figure1, une vue méridienne d'un schéma d'un pneumatique selon l'invention,
- figure 2, une vue méridienne d'un schéma simplifié du pneumatique de la figure 1,
- figure 3, un schéma illustrant des courbes force/allongement de câbles selon l'invention et câbles usuels.

Les figures ne sont pas représentées à l'échelle pour en simplifier la compréhension. Les figures ne représentent qu'une demi-vue d'un pneumatique qui se prolonge de manière symétrique par rapport à l'axe XX' qui représente le plan médian circonférentiel, ou plan équatorial, d'un pneumatique.

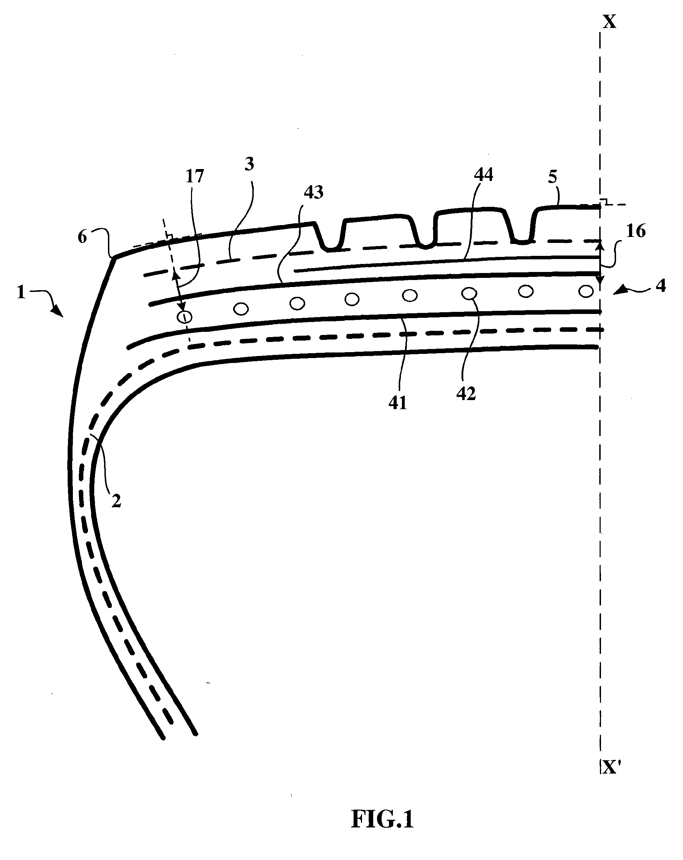

Sur la figure 1, le pneumatique 1, de dimension 315/70 R 22.5 XF, a un rapport de forme H/S égal à 0,70, H étant la hauteur du pneumatique 1 sur sa jante de montage et S sa largeur axiale maximale. Ledit pneumatique 1 comprend une armature de carcasse radiale 2 ancrée dans deux bourrelets, non représentés sur la figure. L'armature de carcasse est formée d'une seule couche de câbles métalliques. Cette armature de carcasse 2 est frettée par une armature de sommet 4, formée radialement de l'intérieur à l'extérieur :
- d'une première couche de travail 41 formée de câbles métalliques inextensibles 11.35 non frettés, continus sur toute la largeur de la nappe, orientés d'un angle égal à 18°,
- d'une couche d'éléments de renforcement circonférentiels 42 formée de câbles métalliques en acier 21 x23, de type "bi-module",
- d'une seconde couche de travail 43 formée de câbles métalliques inextensibles 11.35 non frettés, continus sur toute la largeur de la nappe, orientés d'un angle égal à 18° et croisés aux câbles métalliques de la couche 41,
- d'une couche de protection 44 formées de câbles métalliques élastiques 18x23.

L'armature de sommet est elle-même coiffée d'une bande de roulement 5.

La largeur axiale L₄₁ de la première couche de travail 41 est égale à 248 mm, ce qui est, pour un pneumatique de forme usuelle, sensiblement inférieur à la largeur L de la bande de roulement, qui est égale, dans le cas étudié, à 262 mm. La différence entre la largeur de la bande de roulement et la largeur L₄₁ est donc égale à 14 mm et en conséquence inférieure à 15 mm conformément à l'invention.

La largeur axiale L₄₃ de la deuxième couche de travail 43 est égale à 230 mm. La différence entre les largeurs L₄₁ et L₄₃ est égale à 18 mm et en conséquence comprise entre 10 et 30 mm conformément à l'invention.

Quant à la largeur axiale globale L₄₂ de la couche d'éléments de renforcement circonférentiels 42, elle est égale à 188 mm.

La dernière nappe de sommet 44, dite de protection, a une largeur L₄₄ égale à 188 mm.

Conformément à l'invention, sur l'ensemble de la largeur de la couche d'éléments de renforcement 42, l'ensemble des couches de l'armature de sommet présente un rayon de courbure quasiment identique à celui de la bande de roulement.

La figure 1 illustre encore la surface d'usure limite 3 ; celle-ci est extrapolée à partir des indicateurs d'usure présents sur le pneumatique mais non représentés sur les figures.

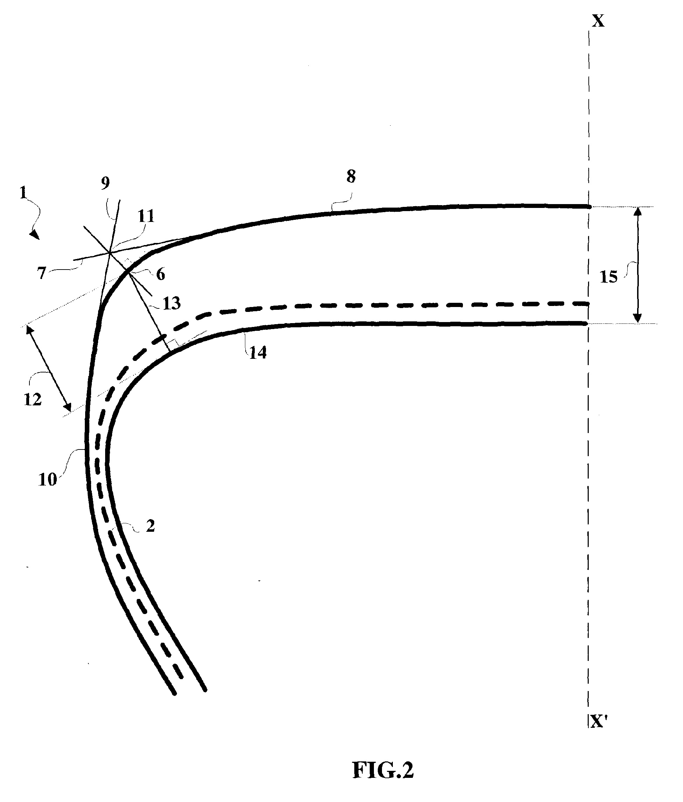

La figure 2 représente une vue méridienne d'un schéma simplifié du pneumatique 1 sur laquelle est représentée une première tangente 7 à la surface d'une extrémité axialement extérieure de la bande de roulement 8 ; la surface de la bande de roulement est définie par la surface radialement extérieure ou sommet des sculptures, non représentées sur ce schéma simplifié de la figure 2. Une seconde tangente 9 à la surface de l'extrémité radialement extérieure d'un flanc 10 coupe la première tangente 7 en un point 11. La projection orthogonale sur la surface extérieure du pneumatique définit l'extrémité d'épaulement 6.

Sur la figure 2 est ainsi indiquée la mesure de l'épaisseur du bloc sommet à une extrémité d'épaulement 6, définie par la longueur 12 de la projection orthogonale 13 de l'extrémité d'épaulement 6 sur la couche de mélange caoutchouteux 14 radialement la plus à l'intérieur du pneumatique.

La figure 2 montre encore la mesure de l'épaisseur du bloc sommet dans le plan médian circonférentiel XX', définie comme étant la distance 15 selon la direction radiale entre la tangente au sommet de la bande de roulement 8 dans le plan médian circonférentiel et la tangente au mélange caoutchouteux 14 radialement le plus à l'intérieur du pneumatique, dans le plan médian circonférentiel.

Conformément à l'invention, les mesures d'épaisseur 12 du bloc sommet à chacune des extrémités d'épaulement 6 sont égales à 39,4 mm. Dans le plan médian circonférentiel XX', la mesure d'épaisseur 15 du bloc sommet est égale à 31,7 mm. Le rapport de l'épaisseur du bloc sommet à une extrémité d'épaulement sur l'épaisseur du bloc sommet dans le plan médian circonférentiel est égal à 1,24 et donc supérieur à 1,2.

Conformément encore à l'invention, le rapport de la distance 16 entre la surface d'usure limite et les éléments de renforcement de la couche d'éléments de renforcement circonférentiels dans le plan médian circonférentiel sur la distance 17 entre la surface d'usure limite et les éléments de renforcement de la couche d'éléments de renforcement circonférentiels aux extrémités de ladite couche d'éléments de renforcement circonférentiels est égal à 1 et donc compris entre 0.95 et 1.05. En effet, les distances 16, 17 entre la surface d'usure limite et les éléments de renforcement de la couche d'éléments de renforcement circonférentiels, respectivement dans le plan médian circonférentiel et aux extrémités de ladite couche d'éléments de renforcement circonférentiels sont identiques et égales à 10 mm.

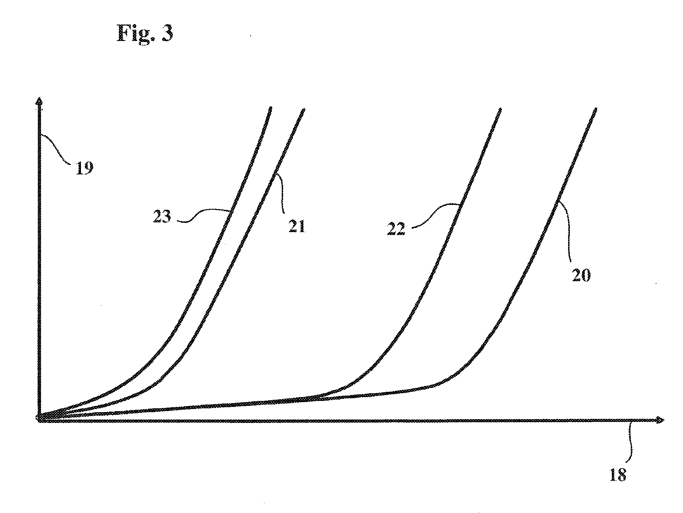

La figure 3 représente un graphe reproduisant les courbes force/allongement d'un câble utilisé conformément à une variante de l'invention pour former la couche d'éléments de renforcement circonférentiels ayant été assemblé par retordage, tel que décrit précédemment, comparé à un câble de même formule et d'utilisation plus usuelle pour ce type d'application.

Ce graphe illustre l'allongement 18 observé pour une force 19 appliquée en traction sur le câble selon la norme ISO 6892 de 1984.

Le câble selon l'invention est un câble en acier 21x23, de type "bi-module" dont la construction est 3x(0.26+6x0.23) 5.0/7.5 SS ; ce câble à torons est constitué de 21 fils élémentaires de formule 3 x (1+6), avec 3 torons tordus ensembles avec un pas de 7.5 mm, chacun constitué de 7 fils, un fil formant une âme centrale de diamètre égal à 26/100 mm et 6 fils enroulés de diamètre égal à 23/100 mm avec un pas de 5 mm.

Le câble de référence auquel il est comparé est un câble en acier de même formule 21x23, de type "bi-module" dont la construction est 3x(0.26+6x0.23) 4.4/6.6 SS.

La courbe 20 correspond au câble selon l'invention dans son état initial et la courbe 21 correspond au même câble extrait du pneumatique, celui-ci étant imprégné de gomme et ayant subi la cuisson du pneumatique.

De même, les courbes 22 et 23 correspondent au câble de référence, respectivement dans son état initial et extrait du pneumatique.

Il ressort clairement de ces courbes que l'allongement structural du câble selon l'invention est supérieur à celui du câble de référence. Par ailleurs, le module d'élasticité, ou module tangent maximum, du câble selon l'invention est égal à 100 GPa alors que celui du câble de référence est égal à 90 GPa.

Ces différences de valeurs s'expliquent par le procédé d'assemblage par retordage dans le cas du câble selon l'invention et par les différences de pas d'assemblage, celles-ci étant plus importantes dans le cas du câble selon l'invention.

Concernant les mesures sur les câbles extraits du pneumatique, l'allongement structural du câble selon l'invention reste supérieur mais la valeur du module tangent maximum devient inférieure pour le câble selon l'invention comparée à celle du câble de référence ; 78 GPa pour le câble selon l'invention comparé à 85 GPa pour le câble de référence.

Le module tangent maximum notamment plus faible pour les câbles extraits du pneumatique combiné à un allongement structural plus important, comparés à des câbles de même formule mais réalisé sans étape de retordage et avec des pas d'hélices inférieurs, va permettre de diminuer les tensions auxquelles sont soumis les éléments de renforcement de la couche d'éléments de renforcement circonférentiels notamment au niveau des extrémités de ladite couche lorsque celle-ci présente une forme galbée comme dans le cas de l'invention lors des passages dans l'aire de contact qui entraînent une déformation du pneumatique.

Conformément à l'invention, les câbles selon l'invention présentent une réduction du module tangent maximum entre leur état initial et extraits du pneumatique égal à 22 (100-78) et donc supérieure à 15 GPa.

Des essais ont été réalisés avec le pneumatique réalisé selon l'invention conformément à la représentation de la figure 1 comprenant une couche d'élément de renforcement circonférentiels réalisés avec des câbles de renforcement selon l'invention tels qu'ils viennent d'être décrits. Des essais identiques ont été réalisés avec un pneumatique de référence identique mais réalisé selon une configuration différente selon laquelle les câbles de la couche d'éléments de renforcement circonférentiels sont les câbles de référence décrits précédemment et l'ensemble des couches constituant l'armature de renforcement présentant des rayons de courbure différents de celui de la surface de la bande de roulement, ces rayons de courbures étant quasi-infinis.

La masse du pneumatique selon l'invention est 2% inférieure à celle du pneumatique de référence.

De premiers essais ont consisté à réaliser des roulages sur volant avec chacun des pneumatiques et en leur faisant suivre des parcours équivalents à des trajectoires en ligne droite, les pneumatiques étant soumis à des charges supérieures à la charge nominale pour accélérer ce type de test.

La charge par pneumatique est de 3800 Kg en début de roulage et évolue pour atteindre une charge de 4800 Kg en fin de roulage.

Les résultats de ces premiers essais ont montré que les résultats obtenus sont comparables pour les deux types de pneumatiques.

D'autres essais d'endurance ont été réalisés sur une machine de tests imposant une charge aux pneumatiques et un angle de dérive.

Les résultats obtenus montrent encore une fois des résultats très proches pour les deux types de pneumatiques.

## Revendications

1. Pneumatique (1) à armature de carcasse radiale (2) comprenant une armature de sommet (4) formée d'au moins deux couches de sommet de travail (41, 43) d'éléments de renforcement inextensibles, croisés d'une nappe à l'autre en faisant avec la direction circonférentielle des angles compris entre 10° et 45°, elle-même coiffée radialement d'une bande de roulement (8), ladite bande de roulement étant réunie à deux bourrelets par l'intermédiaire de deux flancs, l'armature de sommet comportant au moins une couche (42) d'éléments de renforcement circonférentiels, le rapport de l'épaisseur (12) du bloc sommet à une extrémité d'épaulement (6) sur l'épaisseur (15) du bloc sommet dans le plan médian circonférentiel (XX') étant supérieur à 1,20, **caractérisé en ce que** le rapport de la distance (16) entre la surface d'usure limite (3) et les éléments de renforcement de la couche (42) d'éléments de renforcement circonférentiels dans le plan médian circonférentiel (XX') sur la distance (17) entre la surface d'usure limite (3) et les éléments de renforcement de la couche (42) d'éléments de renforcement circonférentiels aux extrémités de ladite couche d'éléments de renforcement circonférentiels est compris entre 0.95 et 1.05.

2. Pneumatique (1) selon la revendication 1, **caractérisé en ce que** les éléments de renforcement de la couche (42) d'éléments de renforcement circonférentiels sont des câbles à torons présentant une réduction du module tangent maximum entre leur état initial et extraits du pneumatique supérieur à 15 GPa et de préférence supérieur à 20 GPa.

3. Pneumatique (1) selon l'une des revendications 1 ou 2, **caractérisé en ce que** les éléments de renforcement d'au moins une couche (42) d'éléments de renforcement circonférentiels sont des éléments de renforcement métalliques présentant un module sécant à 0,7 % d'allongement compris entre 10 et 120 GPa et un module tangent maximum inférieur à 150 GPa.

4. Pneumatique (1) selon la revendication 3, **caractérisé en ce que** le module sécant des éléments de renforcement à 0,7 % d'allongement est inférieur à 100 Gpa, de préférence supérieur à 20 GPa et de préférence encore compris entre 30 et 90 GPa.

5. Pneumatique (1) selon l'une des revendications 3 ou 4, **caractérisé en ce que** le module tangent maximum des éléments de renforcement est inférieur à 130 GPa et de préférence inférieur à 120 GPa.

6. Pneumatique (1) selon l'une des revendications précédentes, **caractérisé en ce que** les éléments de renforcement de ladite couche (42) d'éléments de renforcement circonférentiels sont des éléments de renforcement métalliques présentant une courbe contrainte de traction en fonction de l'allongement relatif ayant des faibles pentes pour les faibles allongements et une pente sensiblement constante et forte pour les allongements supérieurs.

7. Pneumatique (1) selon l'une des revendications précédentes, **caractérisé en ce que** la couche de sommet de travail (41) axialement la plus large est radialement à l'intérieur des autres couches de sommet de travail (43).

8. Pneumatique (1) selon l'une des revendications précédentes, **caractérisé en ce que** la différence entre la largeur axiale de la couche de sommet de travail (41) axialement la plus large et la largeur axiale de la couche de sommet de travail (43) axialement la moins large est comprise entre 10 et 30 mm.

9. Pneumatique (1) selon l'une des revendications précédentes, **caractérisé en ce que** la largeur axiale d'au moins une couche (42) d'éléments de renforcement circonférentiels est inférieure à la largeur axiale de la couche de sommet de travail (41) axialement la plus large.

10. Pneumatique (1) selon l'une des revendications précédentes, **caractérisé en ce qu'**au moins une couche (42) d'éléments de renforcement circonférentiels est disposée radialement entre deux couches de sommet de travail (41, 43).

11. Pneumatique (1) selon la revendication 10, **caractérisé en ce que** les largeurs axiales des couches de sommet de travail (41, 43) radialement adjacentes à la couche (42) d'éléments de renforcement circonférentiels sont supérieures à la largeur axiale de ladite couche (42) d'éléments de renforcement circonférentiels.

12. Pneumatique (1) selon la revendication 11, **caractérisé en ce que** les couches de sommet de travail (41, 43) adjacentes à la couche (42) d'éléments de renforcement circonférentiels sont de part et d'autre du plan équatorial et dans le prolongement axial immédiat de la couche d'éléments de renforcement circonférentiels couplées sur une largeur axiale, pour être ensuite découplées par des profilés de mélange de caoutchouc au moins sur le restant de la largeur commune aux dites deux couches de travail.

13. Pneumatique (1) selon l'une des revendications précédentes, **caractérisé en ce que** l'armature de sommet (4) est complétée radialement à l'extérieur par au moins une nappe supplémentaire (44), dite de protection, d'éléments de renforcement dits élastiques, orientés par rapport à la direction circonférentielle avec un angle compris entre 10° et 45° et de même sens que l'angle formé par les éléments inextensibles de la nappe de travail qui lui est radialement adjacente.

14. Pneumatique (1) selon l'une des revendications précédentes, **caractérisé en ce que** l'armature de sommet (4) comporte en outre une couche de triangulation formée d'éléments de renforcement métalliques faisant avec la direction circonférentielle des angles supérieurs à 60°.

## Patentansprüche

1. Luftreifen (1) mit radialer Karkassenbewehrung (2), die eine Scheitelbewehrung (4) enthält, welche von mindestens zwei Arbeitsscheitelschichten (41, 43) von nicht dehnbaren Verstärkungselementen geformt wird, die sich von einer Lage zur anderen kreuzen, indem sie mit der Umfangsrichtung Winkel zwischen 10° und 45° bilden, die selbst radial von einem Laufstreifen (8) überlagert ird, wobei der Laufstreifen mittels zweier Flanken mit zwei Wülsten verbunden ist, wobei die Scheitelbewehrung mindestens eine Schicht (42) von Umfangsverstärkungselementen aufweist, wobei das Verhältnis der Dicke (12) des Scheitelblocks an einem Schulterende (6) zur Dicke (15) des Scheitelblocks in der Umfangsmittelebene (XX') größer als 1,20 ist, **dadurch gekennzeichnet, dass** das Verhältnis des Abstands (16) zwischen der Grenzabnutzungsfläche (3) und den Verstärkungselementen der Schicht (42) von Umfangsverstärkungselementen in der Umfangsmittelebene (XX') zum Abstand (17) zwischen der Grenzabnutzungsfläche (3) und den Verstärkungselementen der Schicht (42) von Umfangsverstärkungselementen an den Enden der Schicht von Umfangsverstärkungselementen zwischen 0,95 und 1,05 liegt.

2. Luftreifen (1) nach Anspruch 1, **dadurch gekennzeichnet, dass** die Verstärkungselemente der Schicht (42) von Umfangsverstärkungselementen Litzenkabel sind, die eine Reduktion des maximalen Tangentenmoduls zwischen ihrem Anfangszustand und aus dem Luftreifen entnommen von mehr als 15 GPa und vorzugsweise mehr als 20 GPa haben.

3. Luftreifen (1) nach einem der Ansprüche 1 oder 2, **dadurch gekennzeichnet, dass** die Verstärkungselemente mindestens einer Schicht (42) von Umfangsverstärkungselementen metallische Verstärkungselemente sind, die einen Sekantenmodul bei 0,7 % Längung zwischen 10 und 120 GPa und einen maximalen Tangentenmodul niedriger als 150 GPa haben.

4. Luftreifen (1) nach Anspruch 3, **dadurch gekennzeichnet, dass** der Sekantenmodul der Verstärkungselemente bei 0,7 % Längung niedriger als 100 GPa ist, vorzugsweise höher als 20 GPa, und noch bevorzugter zwischen 30 und 90 GPa liegt.

5. Luftreifen (1) nach einem der Ansprüche 3 oder 4, **dadurch gekennzeichnet, dass** der maximale Tangentenmodul der Verstärkungselemente niedriger als 130 GPa und vorzugsweise niedriger als 120 GPa ist.

6. Luftreifen (1) nach einem der vorhergehenden Ansprüche, **dadurch gekennzeichnet, dass** die Verstärkungselemente der Schicht (42) von Umfangsverstärkungselementen metallische Verstärkungselemente sind, die eine Zugspannungskurve abhängig von der relativen Längung haben, die geringe Steigungen für die geringen Längungen und eine im Wesentlichen konstante und starke Steigung für die größeren Längungen hat.

7. Luftreifen (1) nach einem der vorhergehenden Ansprüche, **dadurch gekennzeichnet, dass** die axial breiteste Arbeitsscheitelschicht (41) sich radial innerhalb der anderen Arbeitsscheitelschichten (43) befindet.

8. Luftreifen (1) nach einem der vorhergehenden Ansprüche, **dadurch gekennzeichnet, dass** der Unterschied zwischen der axialen Breite der axial breitesten Arbeitsscheitelschicht (41) und der axialen Breite der axial am wenigsten breiten Arbeitsscheitelschicht (43) zwischen 10 und 30 mm liegt.

9. Luftreifen (1) nach einem der vorhergehenden Ansprüche, **dadurch gekennzeichnet, dass** die axiale Breite mindestens einer Schicht (42) von Umfangsverstärkungselementen geringer als die axiale Breite der axial breitesten Arbeitsscheitelschicht (41) ist.

10. Luftreifen (1) nach einem der vorhergehenden Ansprüche, **dadurch gekennzeichnet, dass** mindestens eine Schicht (42) von Umfangsverstärkungselementen radial zwischen zwei Arbeitsscheitelschichten (41, 43) angeordnet ist.

11. Luftreifen (1) nach Anspruch 10, **dadurch gekennzeichnet, dass** die axialen Breiten der radial der Schicht (42) von Umfangsverstärkungselementen benachbarten Arbeitsscheitelschichten (41, 43) größer als die axiale Breite der Schicht (42) von Umfangsverstärkungselementen sind.

12. Luftreifen (1) nach Anspruch 11, **dadurch gekennzeichnet, dass** die der Schicht (42) von Umfangsverstärkungselementen benachbarten Arbeitsscheitelscheitelschichten (41, 43) zu beiden Seiten der Äquatorialebene und in der direkten axialen Verlängerung der Schicht von Umfangsverstärkungselementen über eine axiale Breite gekoppelt sind, um anschließend durch Profilteile aus Kautschukmischung über mindestens den Rest der den zwei Arbeitsschichten gemeinsamen Breite entkoppelt zu sein.

13. Luftreifen (1) nach einem der vorhergehenden Ansprüche, **dadurch gekennzeichnet, dass** die Scheitelbewehrung (4) radial außen durch mindestens eine zusätzliche so genannte Schutzlage (44) von so genannten elastischen Verstärkungselementen vervollständigt wird, die bezüglich der Umfangsrichtung mit einem Winkel zwischen 10° und 45° und von gleicher Richtung wie der Winkel ausgerichtet sind, der von den nicht dehnbaren Elementen der Arbeitslage gebildet wird, die ihr radial benachbart ist.

14. Luftreifen (1) nach einem der vorhergehenden Ansprüche, **dadurch gekennzeichnet, dass** die Scheitelbewehrung (4) außerdem eine Triangulationsschicht aufweist, die von metallischen Verstärkungselementen gebildet wird, die mit der Umfangsrichtung Winkel von mehr als 60° bilden.

## Claims

1. Tyre (1) with radial carcass reinforcement (2) comprising a crown reinforcement (4) formed of at least two working crown layers (41, 43) of inextensible reinforcing elements, which are crossed from one ply to the other making angles of between 10° and 45° with the circumferential direction, itself radially capped by a tread (8), the said tread being connected to two beads by two sidewalls, the crown reinforcement comprising at least one layer (42) of circumferential reinforcing elements, the ratio of the thickness of the crown block at a shoulder end to the thickness of the crown block in the circumferential median plane being greater than 1.20, **characterized in that** the ratio of the distance (16) between the extreme wear surface (3) and the reinforcing elements of the layer (42) of circumferential reinforcing elements in the circumferential median plane (XX') to the distance (17) between the extreme wear surface (3) and the reinforcing elements of the layer (42) of circumferential reinforcing elements at the ends of the said layer of circumferential reinforcing elements is comprised between 0.95 and 1.05.

2. Tyre (1) according to Claim 1, **characterized in that** the reinforcing elements of the layer (42) of circumferential reinforcing elements are stranded cords exhibiting, between their initial state and their state when extracted from the tyre, a reduction greater than 15 GPa and preferably greater than 20 GPa in the maximum tangent modulus.

3. Tyre (1) according to one of Claims 1 or 2, **characterized in that** the reinforcing elements of at least one layer (42) of circumferential reinforcing elements are metal reinforcing elements having a secant modulus at 0.7% elongation comprised between 10 and 120 GPa and a maximum tangent modulus of less than 150 GPa.

4. Tyre (1) according to Claim 3, **characterized in that** the secant modulus of the reinforcing elements at 0.7% elongation is less than 100 GPa, preferably greater than 20 GPa and more preferably still, comprised between 30 and 90 GPa.

5. Tyre (1) according to one of Claims 3 or 4, **characterized in that** the maximum tangent modulus of the reinforcing elements is less than 130 GPa and preferably less than 120 GPa.

6. Tyre (1) according to one of the preceding claims, **characterized in that** the reinforcing elements of the said layer (42) of circumferential reinforcing elements are metal reinforcing elements exhibiting a tensile stress/relative elongation curve that has shallow gradients for small elongations and a substantially constant and steep gradient for greater elongations.

7. Tyre (1) according to one of the preceding claims, **characterized in that** the axially widest working crown layer (41) is radially on the inside of the other working crown layers (43).

8. Tyre (1) according to one of the preceding claims, **characterized in that** the difference between the axial width of the axially widest working crown layer (41) and the axial width of the axially narrowest working crown layer (43) is comprised between 10 and 30 mm.

9. Tyre (1) according to one of the preceding claims, **characterized in that** the axial width of at least one layer (42) of circumferential reinforcing elements is less than the axial width of the axially widest working crown layer (41).

10. Tyre (1) according to one of the preceding claims, **characterized in that** at least one layer (42) of circumferential reinforcing elements is laid radially between two working crown layers (41, 43).

11. Tyre (1) according to Claim 10, **characterized in that** the axial widths of the working crown layers (41, 43) radially adjacent to the layer (42) of circumferential reinforcing elements are greater than the axial width of the said layer (42) of circumferential reinforcing elements.

12. Tyre (1) according to Claim 11, **characterized in that** the working crown layers (41, 43) adjacent to the layer (42) of circumferential reinforcing elements are, on each side of the equatorial plane and in the immediate axial continuation of the layer of circumferential reinforcing elements, coupled over an axial width and then decoupled by profiled elements of rubber compound at least over the remainder of the width common to the said two working layers.

13. Tyre (1) according to one of the preceding claims, **characterized in that** the crown reinforcement (4) is supplemented radially on the outside by at least one additional ply (44), known as a protective ply, of reinforcing elements that are said to be elastic, which are directed at an angle comprised between 10° and 45° with respect to the circumferential direction and in the same direction as the angle formed by the inextensible elements of the working ply radially adjacent to it.

14. Tyre (1) according to one of the preceding claims, **characterized in that** the crown reinforcement (4) further comprises a triangulation layer formed of metal reinforcing elements that make angles greater than 60° with the circumferential direction.
